# EUROPÄISCHE PATENTSCHRIFT

(11) **EP 0 507 735 B1**
(45) Veröffentlichungstag und Bekanntmachung des Hinweises auf die Patenterteilung: **20.08.1997**
(21) Anmeldenummer: 92810221.9
(22) Anmeldetag: 25.03.1992
(51) Int. Cl.: C08G 59/18

(54) **Addukte aus Epoxiden und Aminen**
Adducts from epoxy resins and amines
Adducts de résines époxydes et d'amines

(30) Priorität: 04.04.1991 CH 1003/91
(43) Veröffentlichungstag der Anmeldung: 07.10.1992
(73) Patentinhaber: Ciba Specialty Chemicals Holding Inc., 4057 Basel (CH)
(72) Erfinder: Moser, Roland, CH-4058 Basel (CH); Lehmann, Hans, CH-4147 Aesch (CH); Bär, Daniel, CH-4125 Riehen (CH)

(56) Entgegenhaltungen:
- EP-A- 0 044 816
- FR-A- 2 143 366
- US-A- 4 539 347

## Beschreibung

Die vorliegende Erfindung betrifft Addukte erhältlich durch Umsetzung von cycloaliphatischen oder heterocycloaliphatischen Polyaminen mit polyfunktionellen Epoxiden sowie deren Verwendung als Härter für Epoxidharze.

Epoxidharze, die mit aromatischen Aminen gehärtet werden, weisen bekanntlich hohe Wärmeformbeständigkeiten auf.
In der US-Patentschrift 3 996 175 werden Addukte aus aromatischen Polyaminen und niedermolekularen Epoxiden als Härter für Epoxidharze beschrieben. Die so erhaltenen Epoxidharzpressmassen weisen hohe Lagerstabilitäten und grosse Härtungsgeschwindigkeiten auf.

Die US-Patentschrift 3 963 667 offenbart aminogruppenhaltige Addukte aus cycloaliphatischen, aromatischen oder heterocyclischen Polyaminen und Polyglycidylverbindungen, bevorzugt Diglycidylverbindungen, als Härter für vorverlängerte Triglycidylbishydantoine oder Triglycidylbisdihydrouracile.

Die Verwendung als Härter für Klebstoffe erfordert jedoch eine niedrige Viskosität, was bei den bekannten Addukthärtern nicht gegeben ist
Ausserdem besteht aus ökotoxikologischen Gründen ein Bedürfnis, die aromatischen Amine durch weniger bedenkliche Stoffe zu ersetzen.

Es wurde nun gefunden, dass Addukte aus weniger toxischen cycloaliphatischen oder heterocycloaliphatischen Aminen und Polyepoxidverbindungen eine niedrige Viskosität und eine helle Farbe aufweisen und die damit gehärteten Epoxidharze sich durch hohe Wärmeformbeständigkeit und Chemikalienbeständigkeit auszeichnen.

Gegenstand der vorliegenden Erfindung sind Addukte erhältlich durch Umsetzung von cycloaliphatischen oder heterocycloaliphatischen Polyaminen enthaltend mindestens zwei primäre Aminogruppen mit dem Tetraglycid des 4,4'-Diaminodiphenylmethans als Polyfunktionelles Epoxid, in solchen Mengen, dass auf ein Epoxidäquivalent 20-100 Äquivalente Aminwasserstoffatome entfallen.

Bei der Herstellung der erfindungsgemässen Addukte werden Polyamin und das polyfunktionelle Epoxid vorzugsweise in solchen Mengen eingesetzt, dass auf ein Epoxidäquivalent 20-50 Äquivalente, insbesondere 20-30 Äquivalente, Aminwasserstoffatome entfallen.

Als Polyaminkomponente kann in den erfindungsgemässen Addukten im Prinzip jedes cyloaliphatische oder heterocycloaliphatische Amin mit mindestens zwei primären Aminogruppen eingesetzt werden.

Beispiele für cyloaliphatische Polyamine sind:
1,2- und 1,4-Diaminocyclohexan, Bis(4-aminocyclohexyl)methan, Bis(4-amino-3-methylcyclohexyl)methan, 2,2-Bis(4-aminocyclohexyl)propan, 3-Aminomethyl-3,5,5-trimethylcyclohexylamin (Isophorondiamin), Bis(4-amino-3,5-dimethylcyclohexyl)methan und 1,3-Bis(aminomethyl)cyclohexan.

Beispiele für heterocycloaliphatische Polyamine sind:
4-Amino-3-aminomethyl-1-cyclohexylpiperidin, 4-Amino-3-aminomethyl-1-benzylpiperidin, 2-[4-(1,7-Diaminoheptyl)]-5,5-dimethyl-1,3-dioxan, 4-Amino-3-aminomethyl-1-(3-dimethylaminopropyl)piperidin, 3-Amino-4-aminomethyl-1-(3-dimethylaminopropyl)-2-methylpyrrolidin, 3-Amino-4-aminomethyl-1,2,2-trimethylpyrrolidin, 3-Amino-4-aminomethyl-1-cyclohexyl-2,2-dimethylpyrrolidin und 3-Amino-4-aminomethyl-2-phenyl-1,2-dimethylpyrrolidin.

Bevorzugt wird als Polyamin ein Diamin der Formeln (I), (II) oder (III) eingesetzt 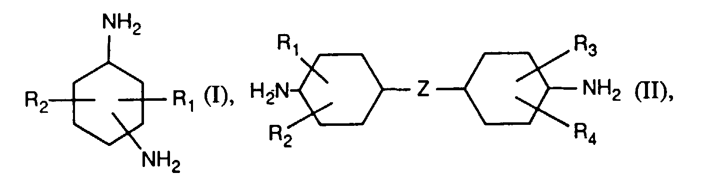 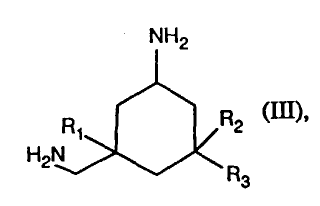 worin die Reste R₁ bis R₄ unabhängig voneinander Wasserstoff oder C₁-C₄-Alkyl bedeuten und Z für eine direkte Bindung, -CH₂-, -C(CH₃)₂-, -S-, -O-, -SO₂- oder -CO- steht.

Besonders bevorzugt sind Addukte gemäss Anspruch 1, worin das cycloaliphatische Polyamin ausgewählt wird aus der Gruppe bestehend aus 1,2-Diaminocyclohexan, 1,4-Diaminocyclohexan, Bis(4-aminocyclohexyl)methan, Bis(4-amin-3-methylcyclohexyl)methan und 3-Aminomethyl-3,5,5-trimethylcyclohexylamin.

In ganz besonders bevorzugten Addukten ist das cycloaliphatische Polyamin Bis(4-aminocyclohexyl)methan oder Bis(4-amino-3-methylcyclohexyl)methan.

Insbesondere bevorzugt sind Addukte worin das Cycloaliphatische Amin Bis(4-amino-3-methylcyclohexyl)methan ist.

Die Herstellung der erfindungsgemässen Addukte erfolgt in an sich bekannter Weise, beispielsweise nach dem in der US-Patentschrift 3 996 175 beschriebenen Verfahren. Die Reaktion wird zweckmässig in Abwesenheit von Lösungsmitteln bei Temperaturen zwischen 50 °C und 200 °C, insbesondere zwischen 80 °C und 120 °C, durchgeführt. Die erfindungsgemässen Addukte müssen nicht als einzelne Verbindungen isoliert werden, sondern sie werden vorteilhaft als Reaktionsgemisch eingesetzt.

Um eine gute Aushärtung bei niedrigen Temperaturen (20-40 °C) zu erzielen, können die erfindungsgemässen Addukte in Kombination mit Härtungsbeschleunigern auf Basis von aliphatischen Aminen und/oder Phenolen eingesetzt werden.

Die unter Verwendung der erfindungsgemässen Addukte gehärteten Epoxidharze weisen überraschend hohe Glasübergangstemperaturen und Kochwasserbeständigkeiten auf.

Gegenstand der vorliegenden Erfindung sind somit auch härtbare Zusammensetzungen enthaltend ein Epoxidharz und ein Addukt aus einem cycloaliphatischen oder heterocycloaliphatischen Amin und dem Tetraglycid des 4,4'-Diaminodiphenylmethans sowie gehärtete Produkte erhältlich durch Aushärtung einer solchen Zusammensetzung.

Je nach Anwendung können den erfindungsgemässen härtbaren Gemischen die gebräuchlichen Zusätze beigegeben werden, wie beispielsweise Füllstoffe, Pigmente, Farbstoffe, Verlaufmittel oder Plastifizierungsmittel.

Die erfindungsgemässen Zusammensetzungen lassen sich ganz allgemein als Giessharze zur Herstellung von gehärteten Produkten einsetzen und können in der dem jeweils speziellen Anwendungsgebiet angepassten Formulierung, beispielsweise als Klebmittel, als Matrixharze, als Werkzeugharze oder als Beschichtungsmittel verwendet werden.

Aufgrund ihrer niedrigen Viskosität eignen sich die erfindungsgemässen Addukte besonders als Härter für Epoxidharz-Klebstoffe, insbesondere für Klebstoffe für Metalle und duroplastische Kunststoffe.

Insbesondere geeignet sind die erfindungsgemässen Addukte für Klebstoffanwendungen, bei denen nur Kalthärtung bzw. Härtung bei niedrigen Temperaturen (Aussenapplikation) möglich ist, aber hohe Temperaturbeständigkeit verbunden mit hoher chemischer Resistenz gefordert wird, beispielsweise beim Verkleben von Leitungen zum Transport heisser Flüssigkeiten.
Die Härtung kann in diesem Fall mittels Heizmanschetten oder in situ erfolgen, d.h. wenn heisse Flüssigkeiten transportiert werden.

### Beispiele A-H:

Die erfindungsgemässen Addukte werden nach der folgenden Vorschrift hergestellt: Unter Inertgasatmosphäre wird in das auf 105 °C erwärmte Amin das auf 50 °C erwärmte Polyepoxid innerhalb einer halben Stunde zugetropft. Anschliessend wird das Reaktionsgemisch eine weitere Stunde bei 100 °C gerührt. Das so hergestellte Addukt kann ohne weitere Aufarbeitung als Härter eingesetzt werden.
Die Mengenverhätnisse der eingesetzten Komponenten und die Eigenschaften der auf diese Weise hergestellten Addukte A-H sind in Tabelle 1 dargestellt.

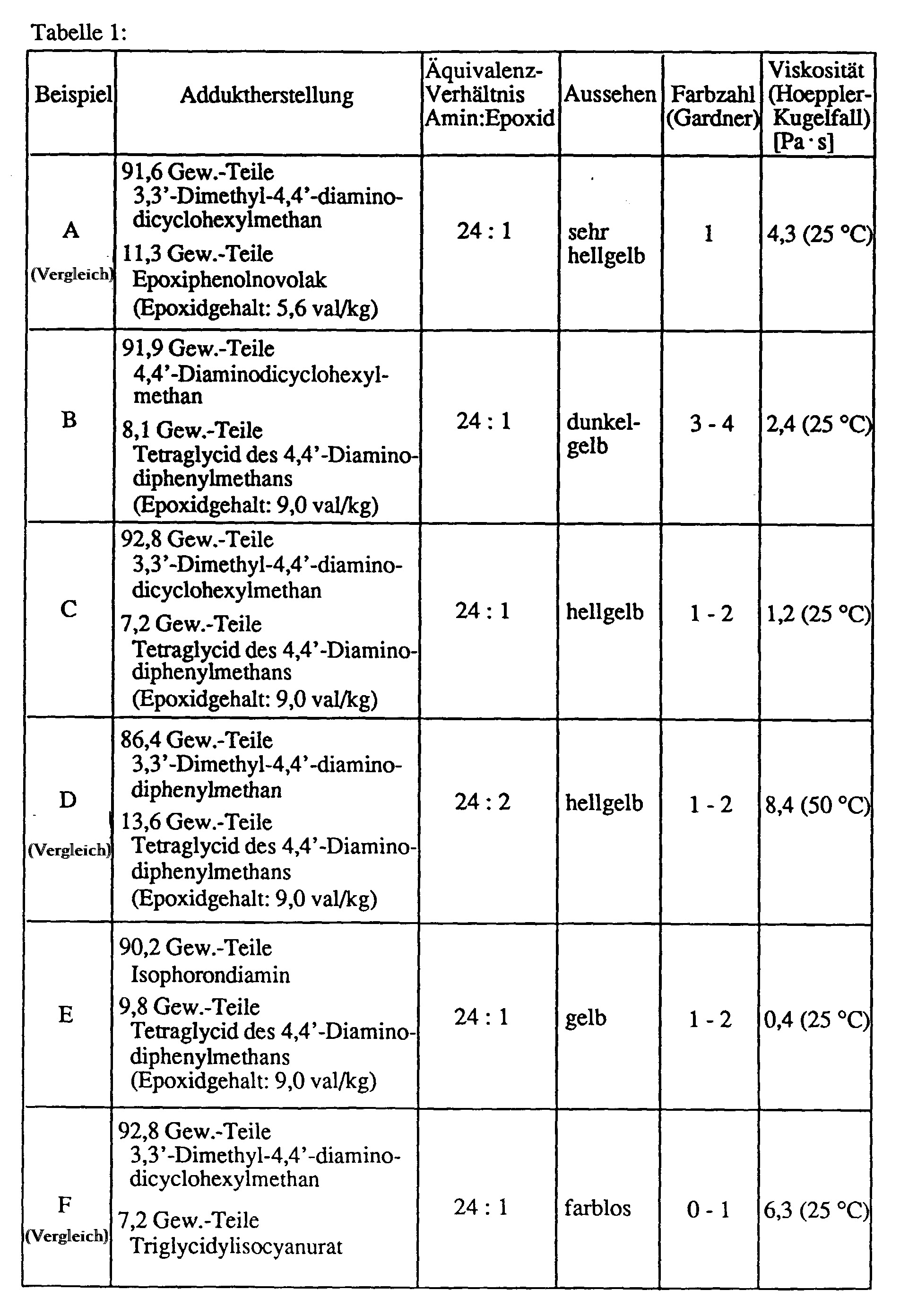

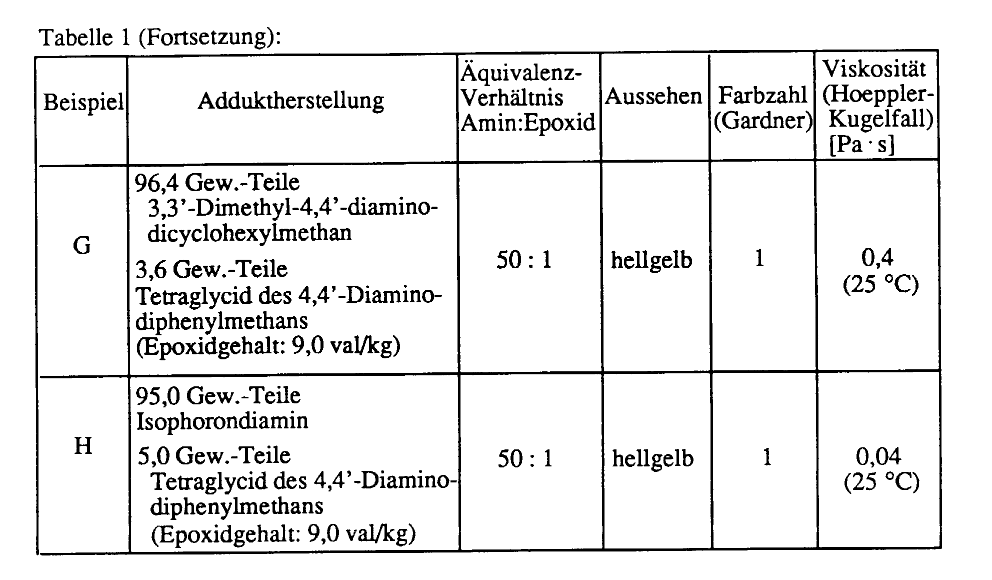

### Applikationsbeispiele 1-6

100 g eines Epoxidharzgemisches aus 30 g Bisphenol A/Bisphenol F-Mischglycid (Epoxidgruppengehalt: 5,6 val/kg) und 70 g Epoxiphenolnovolak (Epoxidgruppengehalt: 5,65 val/kg) werden mit einem Addukthärter gemäss einem der Beispiele A-F und 8,3 g eines Härtungsbeschleunigers aus 75 Gew.-Teilen Pentaethylenhexamin und 25 Gew.-Teilen Bisphenol A gemischt und 24 h bei Raumtemperatur und anschliessend 1 h bei 150 °C gehärtet.
Die Glasübergangstemperaturen (gemessen mit Mettler Thermoanalysengerät TA 3000) und Zugscherfestigkeiten (DIN 53 283) der gehärteten Formstoffe sind in Tabelle 2 dargestellt

**Tabelle 2:**

| Beispiel | 1 | 2 | 3 | 4 | 5 | 6 |
|---|---|---|---|---|---|---|
| Härter A (Vergleich) | 24,3 g | | | | | |
| Härter B | | 23,0 g | | | | |
| Härter C | | | 23,5 g | | | |
| Härter D (Vergleich) | | | | 26,2 g | | |
| Härter E | | | | | 18,4 g | |
| Härter F (Vergleich) | | | | | | 23,5 g |
| Zugscherfestigkeit (N/mm²) | 11,3 | 11,3 | 11,5 | 12,1 | 10,0 | 9,6 |
| Glasübergangstemperatur (°C) | 158 | 163 | 161 | 156 | 164 | 163 |

## Patentansprüche

1. Addukte erhältlich durch Umsetzung von cycloaliphatischen oder heterocycloaliphatischen Polyaminen enthaltend mindestens zwei primäre Aminogruppen mit dem Tetraglycid des 4,4'-Diaminodiphenylmethans in solchen Mengen, dass auf ein Epoxidäquivalent 20-100 Äquivalente Aminwasserstoffatome entfallen.

2. Addukte gemäss Anspruch 1, dadurch gekennzeichnet, dass auf ein Epoxidäquivalent 20-50 Äquivalente Aminwasserstoffatome entfallen.

3. Addukte gemäss Anspruch 1, dadurch gekennzeichnet, dass auf ein Epoxidäquivalent 20-30 Äquivalente Aminwasserstoffatome entfallen.

4. Addukte gemäss Anspruch 1, worin das cycloaliphatische Polyamin ein Diamin der Formel (I), (II) oder (III) ist 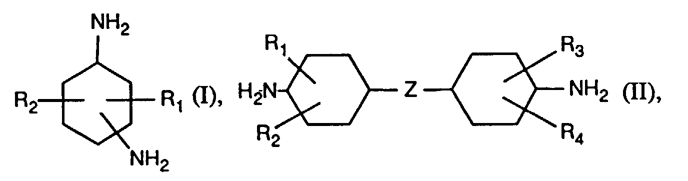 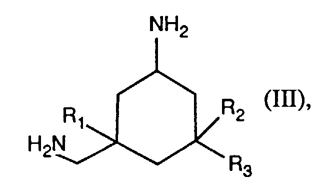 worin die Reste R₁ bis R₄ unabhängig voneinander Wasserstoff oder C₁-C₄-Alkyl bedeuten und Z für eine direkte Bindung, -CH₂-, -C(CH₃)₂-, -S-, -O-, -SO₂- oder -CO- steht.

5. Addukte gemäss Anspruch 1, worin das cycloaliphatische Polyamin ausgewählt wird aus der Gruppe bestehend aus 1,2-Diaminocyclohexan, 1,4-Diaminocyclohexan, Bis(4-aminocyclohexyl)methan, Bis(4-amino-3-methylcyclohexyl)methan und 3-Aminomethyl-3,5,5-trimethylcyclohexylamin.

6. Addukte gemäss Anspruch 1, worin das cycloaliphatische Amin Bis(4-aminocyclohexyl)methan oder Bis(4-amino-3-methylcyclohexyl)methan ist.

7. Addukte gemäss Anspruch 1, worin das cycloaliphatische Amin Bis(4-amino-3-methylcyclohexyl)methan ist.

8. Härtbare Zusammensetzung enthaltend ein Epoxidharz und ein Addukt gemäss Anspruch 1.

9. Gehärtete Produkte erhältlich durch Aushärtung einer Zusammensetzung gemäss Anspruch 8.

10. Verwendung von Addukten gemäss Anspruch 1 als Härter für Klebstoffzusammensetzungen.

## Claims

1. An adduct which is obtainable by reacting a cycloaliphatic or heterocycloaliphatic polyamine containing at least two primary amino groups with the tetraglycide of 4,4'-diaminodiphenylmethane in such amounts that there are 20-100 equivalents of amine hydrogen atoms per epoxide equivalent.

2. An adduct according to claim 1, wherein there are 20-50 equivalents of amine hydrogen atoms per epoxide equivalent.

3. An adduct according to claim 1, wherein there are 20-30 equivalents of amine hydrogen atoms per epoxide equivalent.

4. An adduct according to claim 1, wherein the cycloaliphatic polyamine is a diamine of formula (I), (II) or (III) 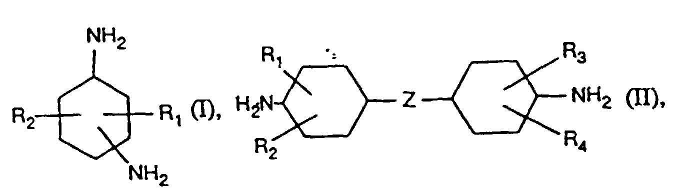 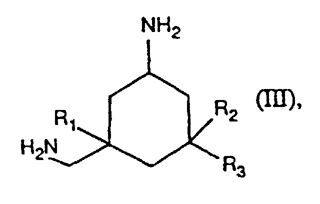 wherein the radicals R₁ to R₄ are independently of one another hydrogen or C₁-C₄alkyl and Z is a direct bond, -CH₂-, -C(CH₃)₂-, -S-, -O-, -SO₂- or -CO-.

5. An adduct according to claim 1, wherein the cycloaliphatic polyamine is selected from the group consisting of 1,2-diaminocyclohexane, 1,4-diaminocyclohexane, bis(4-aminocyclohexyl)methane, bis(4-amino-3-methylcyclohexyl)methane and 3-aminomethyl-3,5,5-trimethylcyclohexylamine.

6. An adduct according to claim 1, wherein the cycloaliphatic amine is bis(4-aminocyclohexyl)methane or bis(4-amino-3-methylcyclohexyl)methane.

7. An adduct according to claim 1, wherein the cycloaliphatic amine is bis(4-amino-3-methylcyclohexyl)methane.

8. A curable composition comprising an epoxy resin and an adduct according to claim 1.

9. A cured product obtainable by curing a composition according to claim 8.

10. Use of an adduct according to claim 1 as a hardener for adhesive compositions.

## Revendications

1. Produits d'addition que l'on peut obtenir par réaction de polyamines cycloaliphatiques ou hétérocycloaliphatiques, contenant au moins deux groupes amino primaires, avec le tétraglycidyle du 4,4'-diaminodiphénylméthane dans des quantités telles que 20 à 100 équivalents d'hydrogène amino soient présents pour 1 équivalent époxyde.

2. Produits d'addition selon la revendication 1, caractérisés en ce que 20 à 50 équivalents d'hydrogène amino sont présents pour 1 équivalent époxyde.

3. Produits d'addition selon la revendication 1, caractérisés en ce que 20 à 30 équivalents d'hydrogène amino sont présents pour 1 équivalent époxyde.

4. Produits d'addition selon la revendication 1, où la polyamine cycloaliphatique est une diamine de formule (I), (II) ou (III) 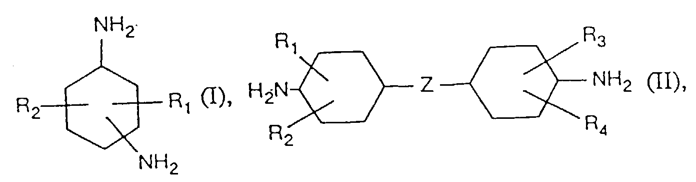 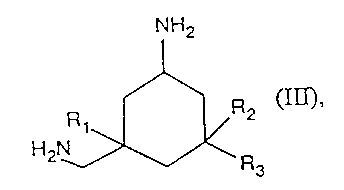 dans lesquelles les restes R₁ à R₄, indépendamment l'un de l'autre, représentent l'hydrogène ou alkyle en C₁-C₄ et Z représente une liaison directe, -CH₂-, -C(CH₃)₂-, -S-, -O-, -SO₂- ou -CO-.

5. Produits d'addition selon la revendication 1, où la polyamine cycloaliphatique est prise dans le groupe comportant le 1,2-diaminocyclohexane, le 1,4-diaminocyclohexane, le bis(4-aminocyclohexyl)méthane, le bis(4-amino-3-méthylcyclohexyl)méthane et la 3-aminométhyl-3,5,5-triméthylcyclohexylamine.

6. Produits d'addition selon la revendication 1, où l'amine cycloaliphatique est le bis(4-aminocyclohexyl)méthane ou le bis(4-amino-4-méthylcyclohexyl)méthane.

7. Produits d'addition selon la revendication 1, où l'amine cycloaliphatique est la bis(4-amino-3-méthylcyclohexyl)méthane.

8. Composition durcissable contenant une résine époxyde et un produit d'addition selon la revendication 1.

9. Produits durcis que l'on peut obtenir par durcissement d'une composition selon la revendication 8.

10. Utilisation des produits d'addition selon la revendication 1 comme durcisseurs de compositions de matières adhésives.
